# EUROPÄISCHE PATENTSCHRIFT

(11) **EP 4 323 155 B1**
(45) Veröffentlichungstag und Bekanntmachung des Hinweises auf die Patenterteilung: **01.01.2025**
(21) Anmeldenummer: 21721611.8
(22) Anmeldetag: 13.04.2021
(51) Int. Cl.: B25J 5/00, B62D 57/032

(54) **DROHNE MIT GLIEDERFÜSSEN**
DRONE WITH JOINTED LEGS
DRONE À PIEDS ARTICULÉS

(43) Veröffentlichungstag der Anmeldung: 21.02.2024
(73) Patentinhaber: REEMTSMA, Satchel, 13349 Berlin (DE)
(72) Erfinder: REEMTSMA, Satchel, 13349 Berlin (DE)
(74) Vertreter: Hertin und Partner Rechts- und Patentanwälte PartG mbB
(86) Internationale Anmeldenummer: PCT/IB2021/053042
(87) Internationale Veröffentlichungsnummer: WO 2022/219371

(56) Entgegenhaltungen:
- EP-A2- 2 003 057
- WO-A2-2016/193666
- US-A1- 2018 044 015
- US-A1- 2018 127 092
- US-A1- 2019 369 641
- US-A1- 2021 070 438
- US-B1- 10 756 919
- US-B1- 9 807 996

## Beschreibung

Die Erfindung betrifft eine Drohne, aufweisend mindestens einen Zentralkörper, eine Mehrzahl an Schraubflügeln, wobei die Schraubflügel um zueinander im Wesentlichen parallele Achsen rotierend aufgehängt sind, und wobei die Aufhängungen der Schraubflügel mit dem Zentralkörper starr verbunden sind, eine Mehrzahl an Gliederfüßen, welche über Gelenke verbundene Glieder aufweisen, wobei die Gliederfüße über ein proximales Ende mit dem Zentralkörper gelenkig verbunden sind.

Zur Überwachung von unübersichtlichen Arealen und zur Durchführung von Aufgaben unterschiedlichster Art ist es bekannt, auf autonome Vorrichtungen zurückzugreifen. Diese autonomen Vorrichtungen sind Drohnen, Molche, reptilähnliche Vorrichtungen und hundeähnliche Vorrichtungen, die nach Manier eines Roboters dazu in der Lage sind, zumindest in Teilen autonom vorbestimmte Aufgaben zu erfüllen.

Aus der Veröffentlichung der US-Patentanmeldung US2018/0127092 A1 ist eine laufende und fliegende Drohne bekannt. Diese weist als Hexapode an den beweglichen Gliedmaßen einklappbare Schraubflügel auf, die im eingeklappten Zustand nach oben weisen und sich den Gliedmaßen anschmiegen. Diese Drohnen können entweder Laufen oder Fliegen.

In der zuvor genannten Druckschrift wird auch auf Internet-Videos verwiesen, in denen spinnenartige Oktapoden mit einer erstaunlich an echte Großspinnen erinnernde Kleinroboter vorgestellt werden, deren Bewegungsapparat die Bewegung einer laufenden Spinne nachahmt und auch spinnentypische Drohgebärden ausführen können. Die dort mit Kleinstcomputern (Arduino^{®}, RaspBerry^{®}) ausgestatteten Kleinroboter ahmen der belebten Natur eine Bewegungsvielfalt nach, die von außen erstaunlich natürlich und echt wirkt. Diese Kleinstroboter sind als Spielzeug oder als Machbarkeitsstudie gedacht, die selbst aber keine Aufgaben erledigen können, wie ein elektrisches Gerät ein- oder ausschalten, einen Raum oder ein Gebäude überwachen oder kleine Gegenstände bewegen.

Aufgabe der Erfindung ist es, einen Kleinroboter zur Verfügung zu stellen, der ohne menschliches Dazutun, also ohne Steuerung durch einen Menschen, eine Vielzahl kleinerer Haushaltsaufgaben, Überwachungsaufgaben oder Datenerfassungsaufgaben durchführen kann.

Die Erfindung wird gelöst durch eine Drohne mit den Merkmalen nach Anspruch 1. Weitere vorteilhafte Ausgestaltungen sind in den Unteransprüchen zu Anspruch 1 angegeben.

Nach der Erfindung ist es vorgesehen, dass eine gattungsgemäße Drohne mit mindestens einem Schubelement mit Gliederfüßen zu versehen, bei denen ein distales Ende mindestens eines Gliederfußes ein Wechselfutter aufweist, über welches das distale Ende des Gliederfußes mit einer Auswahl an sensorischen Vorrichtungen und/oder Greifvorrichtungen und/oder Werkzeugen verbindbar ist.

Die erfindungsgemäße Drohne hat also nicht zwei sich gegenseitig ausschließende Fortbewegungsarten, nämlich Fliegen oder Laufen, sondern das mindestens eine Schubelement und die Gliederfüße können unabhängig voneinander eingesetzt werden. Es ist somit möglich, sowohl das mindestens eine Schubelement einzusetzen als auch die Gliederfüße einzusetzen. So kann die Drohne beispielsweise bei Kletteraufgaben ihre auf die Gliederfüße wirkende Kraft durch Rückwärtsschub des mindestens einen Schubelements erzeugen. Es ist auch möglich, dass sich die Drohne bei Kletteraufgaben durch die Wirkung des mindestens einen Schubelements an der Luft abstützt. Schließlich ist es auch möglich, dass die Drohne beim Fliegen mit den Gliederfüßen einen Gegenstand unter sich festhält, etwa wie ein Greifvogel oder wie ein Insekt. Noch eine weitere Möglichkeit des gleichzeitigen Einsatzes des mindestens einen Schubelements und der Gliederfüße ist ein Transport eines Gegenstandes auf der nach oben liegenden Rückenfläche oder Kopffläche vergleichbar mit dem Transport von Gegenständen durch eine Krabbe oder einen Krebs. Der Einsatz des mindestens einen Schubelements erfordert eine größere Energiemenge. Die Einsatzzeit einer Drohne ist daher begrenzt durch die Kapazität des mitgeführten Akkumulators / der mitgeführten Batterie und durch das Gewicht der Drohne samt Zuladung. Dabei nimmt das Gewicht des Akkumulators oder der Batterie einen erheblichen Anteil des Gesamtgewichtes ein. Je kleiner der Akku, desto höher die mögliche Zuladung, jedoch wird die Flugzeit durch den kleineren Akkumulator / die kleinere Batterie einerseits verkürzt und durch den erhöhten Energieverbrauch durch höhere Zuladung wird die mögliche Flugzeit ebenso verkürzt. Um Gewicht zu sparen, kommt es auch auf kleinste Gewichtseinsparungen an. Die erfindungsgemä-βe Drohne hat daher schmale Gliederfüße als Leichtbau mit Fachwerk. Dazu bestehen die Gliederfüße beispielsweise aus einem dünnen Aluminiumblech, das Aussparungen aufweist, die dem einzelnen Glied eines Gliederfußes ein Aussehen eines Fachwerkverbundes verleihen.

Um die Einsatzvielfalt zu erhöhen, kann es vorgesehen sein, dass mindestens ein Gelenk eines Gliederfußes einen Öffnungswinkel α von mehr als 180° aufweist. Zusätzlich ist es möglich, dass die Längen einzelner Glieder und die Öffnungswinkel α der Gelenke der Gliederfüße im Verhältnis zu den Ausmaßen des Zentralkörpers so bemessen sind, dass ein distales Ende eines ersten Gliederfu-βes bis an ein proximales Ende eines zweiten, dem ersten Gliederfuß gegenüberliegenden Gliederfuß heranführbar ist. Diese Definition erinnert an den Schulreifetest für Kindergartenkinder, die mit ihrem Arm den eigenen Kopf umfassen und das gegenüberliegende Ohr berühren müssen, um die erste Hürde der Schulfähigkeit zu nehmen. Die durch diese Merkmale erreichte Flexibilität bei der Selbstversorgung der Drohne führt im Vergleich zu einer bekannten Drohne zu einem weit größeren Einsatzspektrum.

Die Erfindung wird anhand der folgenden Figuren näher erläutert. Es zeigt:
- Fig. 1: eine erfindungsgemäße Drohne mit herabhängenden Gliederfüßen im reinen Flugbetrieb,
- Fig. 2: die Drohne aus Figur 1 im reinen Krabbelbetrieb,
- Fig. 3: die Drohne aus den vorstehenden Figuren im Kletterbetrieb als gleichzeitige Kombination des Einsatzes von Schraubflügeln und Gliederfüßen,
- Fig. 4: die Drohne aus den vorstehenden Figuren mit einem Kombinationsbetrieb der Gliederfüße als Manipulator und als Fortbewegungsmittel,
- Fig. 5: die Drohne aus den vorstehenden Figuren in einem komplexen Klettereinsatz in einer Haushaltssituation,
- Fig. 6: eine Zusammenwirkung einer erfindungsgemäßen Drohne mit einem entfernten Steuerungsrechner über ein öffentliches Kommunikationsnetzwerk,
- Fig. 7: einen abgetrennten Gliederfuß der erfindungsgemäßen Drohne mit einem kontinuierlich beweglichen Einzelfinger als Werkzeug oder Greifelement,
- Fig. 8.1 bis 8.4: einen kontinuierlich bewegbaren Einzelfinger in verschiedenen Krümmungszuständen,
- Fig. 9.1 bis 9.3: ein abgetrenntes Glied eines Gliederfußes der erfindungsgemäßen Drohne mit drei verschiedenen Aufsätzen,
- Fig. 9.4: ein abgetrenntes Glied eines Gliederfußes der erfindungsgemäßen Drohne mit sichtbarem Wechselfutter,
- Fig. 10: die Drohne aus Figur 2 mit auf einige Gliederfüße aufgesetzten Greifvorrichtungen und sensorischen Vorrichtungen,
- Fig. 11: eine Skizze zur Darstellung bevorzugter Längen- und Öffnungswinkelverhältnisse für die erfindungsgemäße Drohne,
- Fig. 12.1 bis 12.5: einen Ausschnitt auf die Ansicht auf eine erfindungsgemäße Drohne in verschiedenen Zuständen bei einem autonomen Wechsel eines Akkumulators,
- Fig.13: eine Darstellung einer Basisstation, die als Ladevorrichtung und als Funk-Relays-Station (Router) wirkt,
- Fig. 14: eine Skizze zur Verdeutlichung eines Protokolls zur Kommunikation mit einem entfernten Rechner als Steuerungscomputer,
- Fig. 15: eine Skizze einer Einpropeller-Drohne mit innenliegenden Drehmomentausgleich mit zwei Gliederfüßen.

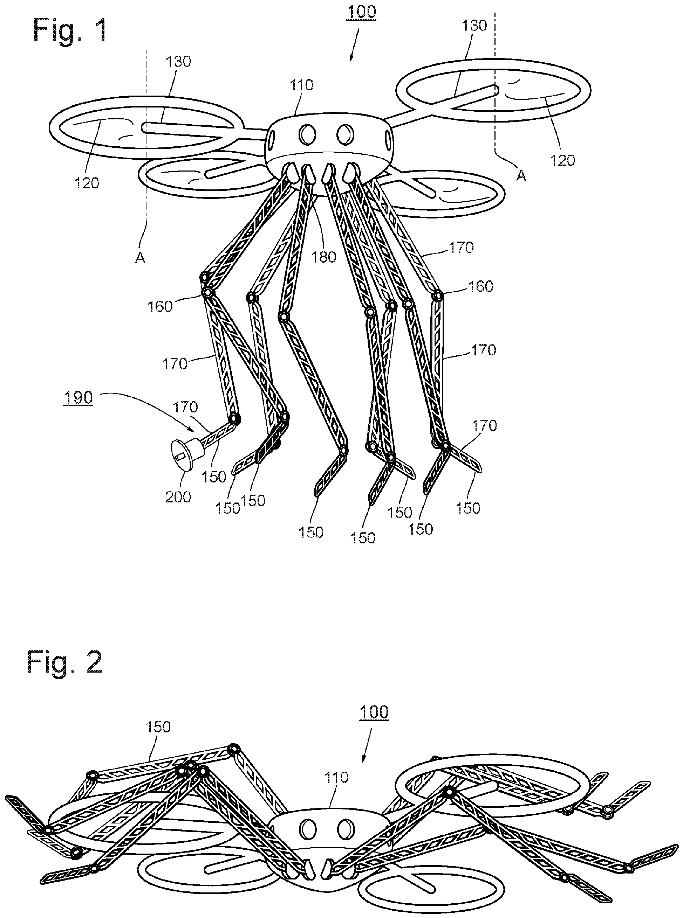

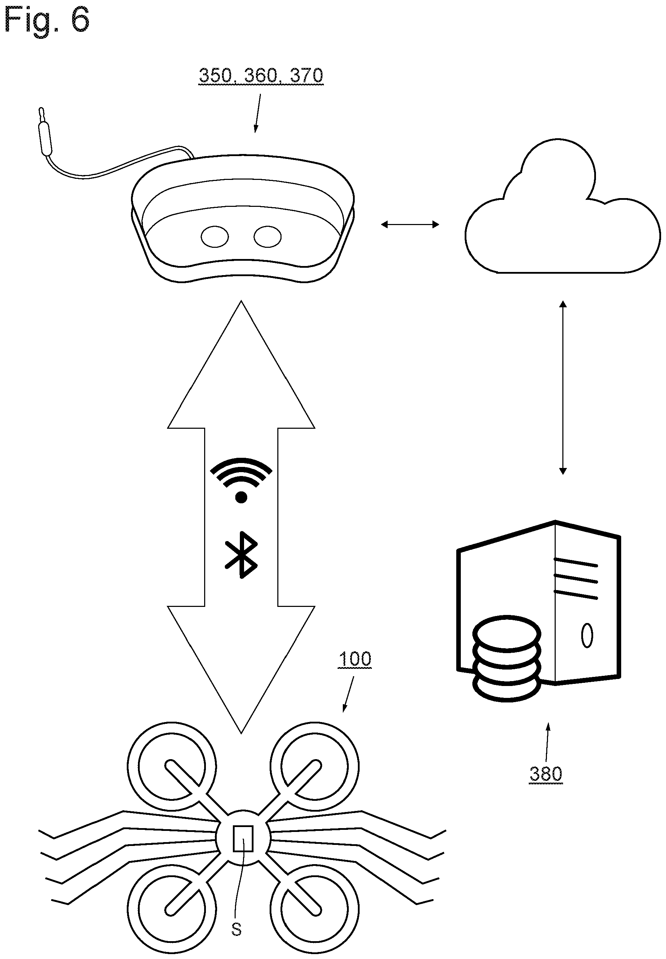

In **Figur 1** ist eine erfindungsgemäße Drohne 100 mit herabhängenden Gliederfüßen 150 im reinen Flugbetrieb dargestellt. Die Drohne 100 verfügt über mindestens einen Zentralkörper 110. In diesem Zentralkörper 110 befindet sich eine Steuerungsvorrichtung S (Figur 6) und eine Mehrzahl an Schraubflügeln 120 ist vorhanden, die in der Nähe des Zentralkörpers rotierend gelagert angeordnet sind. Die Schraubflügel 120 sind um zueinander im Wesentlichen parallele Achsen A rotierend aufgehängt. Es handelt sich bezüglich der Flugvorrichtung in diesem Ausführungsbeispiel um eine Drohne 100 mit einer starren Aufhängung 130 der Schraubflügel 120. Die Aufhängungen 130 der Schraubflügel 120 sind mit dem Zentralkörper 110 also starr verbunden. In dieser beispielhaften Ausführungsvariante ist zumindest nicht vorgesehen, dass die Aufhängung etwa im Flug dynamisch in ihrer Position und/oder Stellung variiert wird. Die Drohne 100 verfügt des Weiteren über eine Mehrzahl an Gliederfüßen 150. Die Gliederfüße 150 weisen ihrerseits über Gelenke 160 verbundene Glieder 170 auf. Die Gliederfüße 150 haben ein proximales Ende 180 und ein distales Ende 190. Das proximale Ende 180 der Gliederfüße 150 befindet sich nahe am Zentralkörper 110. Die Gliederfüße 110 haben auch ein distales Ende 190. Dieses distale Ende 190 entspricht der Fußspitze eines Insekts und ist entfernt vom Zentralkörper 110 angeordnet.

Nach dem Gedanken der Erfindung ist vorgesehen, dass ein distales Ende 190 mindestens eines Gliederfußes 150 ein Wechselfutter 200 aufweist. Das distale Ende 190 kann mit Hilfe des Wechselfutters 200 mit einer Auswahl an sensorischen Vorrichtungen 210, Greifvorrichtungen 220 und/oder Werkzeugen 230 verbunden werden. Sensorische Vorrichtungen 210 können Fühler sein, können Tastelemente sein, aber auch optische, chemische oder physikalische Sensoren zur Erfassung des Zustands der eigenen Umgebung. Durch das Wechselfutter ist es möglich, Gewicht zu sparen und für den jeweiligen Einsatzzweck nur das nötige an funktionalem Ballast mitzuschleppen. In der hier dargestellten Situation befindet sich die Drohne 100 im reinen Flugbetrieb mit herabhängenden Gliederfüßen 150. Die herabhängenden Gliederfüße 150 sind nicht im Abwind der Schraubflügel 120 angeordnet, so dass die Leistung der Schraubflügel 120 nicht durch eine ungünstige Aerodynamik geschmälert wird.

In **Figur** 2 ist die Drohne 100 aus Figur 1 im reinen Krabbelbetrieb gezeigt. Im Krabbelbetrieb ist es in der Regel vorgesehen, dass die Schraubflügel 120 nicht eingeschaltet sind und sich in Ruhestellung befinden. Es kann aber sein, dass die Schraubflügel 120 mit Abwärtsschub betrieben werden, um die Gewichtskraft der Drohne 100 zu erhöhen, beispielsweise, um je nach Einsatzzweck mit dem Eigengewicht etwa einen Gegenstand herunter zu drücken. Es ist aber auch möglich, die Drohne 100 mit einem leichten Aufwärtsschub im Krabbelbetrieb einzusetzen, etwa, um die Wirkung des Eigengewichts der Drohne 100 auf sehr wenig tragfähigen Untergründen zu verringern. Dies kann sinnvoll sein, wenn die Drohne 100 zum Beispiel in einem sumpfigen Gebiet sich unterhalb eines Gebüschs bewegen muss, um zu einem erwünschten Ziel zu gelangen.

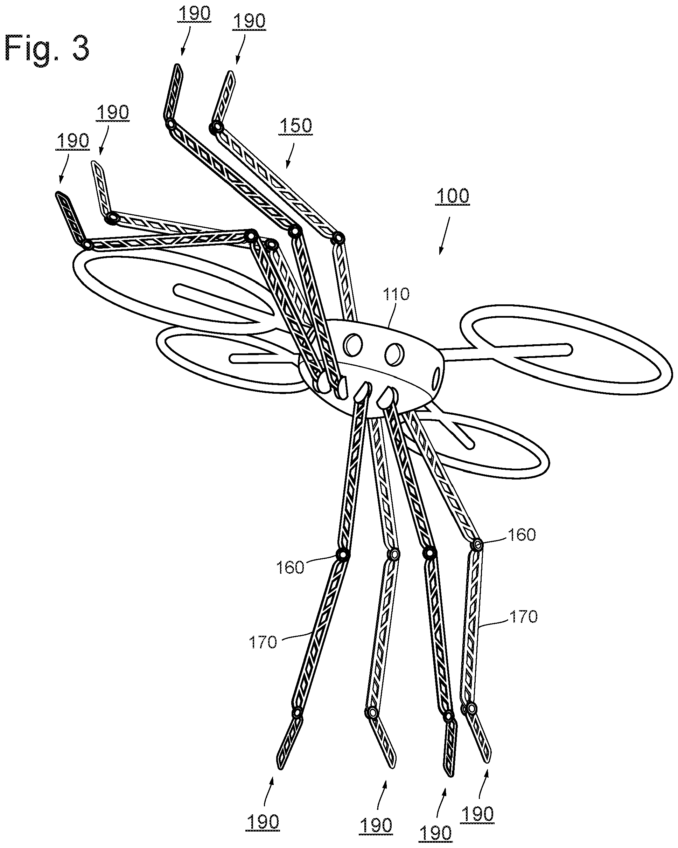

In **Figur 3** ist die Drohne 100 aus den vorstehenden Figuren im Kletterbetrieb gezeigt, wobei diese die Schraubflügel 120 einsetzt und die Gliederfüße 150 in unterschiedlichen Funktionen einsetzt. Mit einem Teil der Gliederfüße 150 steht die Drohne 100 auf den distalen Enden 190 von vier Gliederfüßen 150 auf dem Unterboden auf. Dazu sind die Gelenke 160 nahezu durchgedrückt, das bedeutet, die einzelnen Glieder 170 haben einen Winkel von etwa 180°. Mit vier weiteren Gliederfüßen 150 hangelt sich die Drohne 100 an einer etwa vertikalen und hier nicht gezeigten Wand entlang. Um ihren Stand zu stabilisieren, setzt die Drohne 100 die Schraubflügel 120 ein.

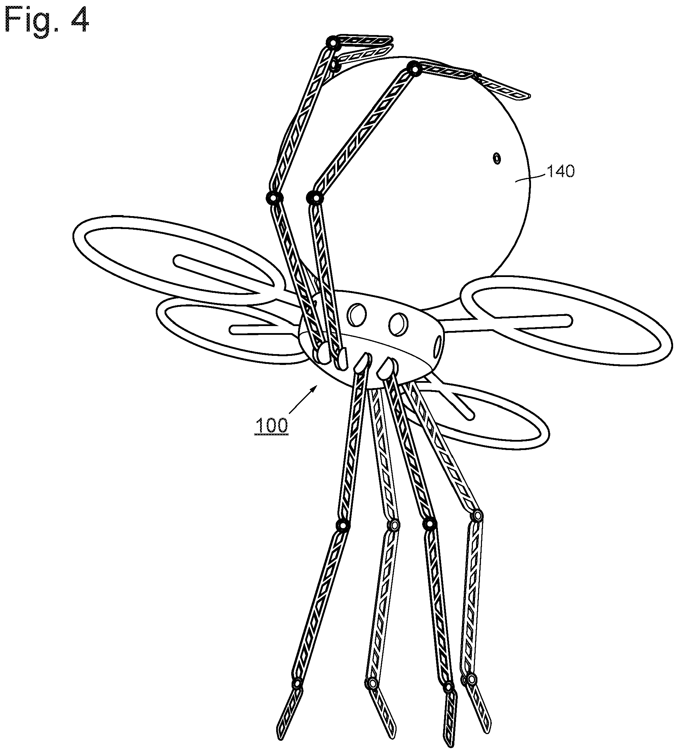

In **Figur 4** ist die Drohne 100 aus den vorstehenden Figuren in einem Kombinationsbetrieb der Gliederfüße 150 als Manipulator und als Fortbewegungsmittel skizziert. Ein Teil der Gliederfüße 150 umgreift hier als Beispiel für einen Gegenstand 140 einen Ball, der auf der nach oben weisenden Rückenfläche 340 aufliegt und durch die zuletzt genannten Gliederfüße 150 festgehalten wird. Da der Ball im Verhältnis zum Gewicht der in Leichtbauweise erstellten Drohne 100 kein unerhebliches Gewicht hat, steht die Drohne 100 auf den distalen Enden 190 von vier Gliederfüßen 150 auf dem Unterboden auf. Dazu sind die Gelenke 160 nahezu durchgedrückt, das bedeutet, die einzelnen Glieder 170 haben einen Winkel von etwa 180°. Um ihren Stand zu stabilisieren, setzt die Drohne 100 die Schraubflügel 120 mit einem Aufwärtsschub ein.

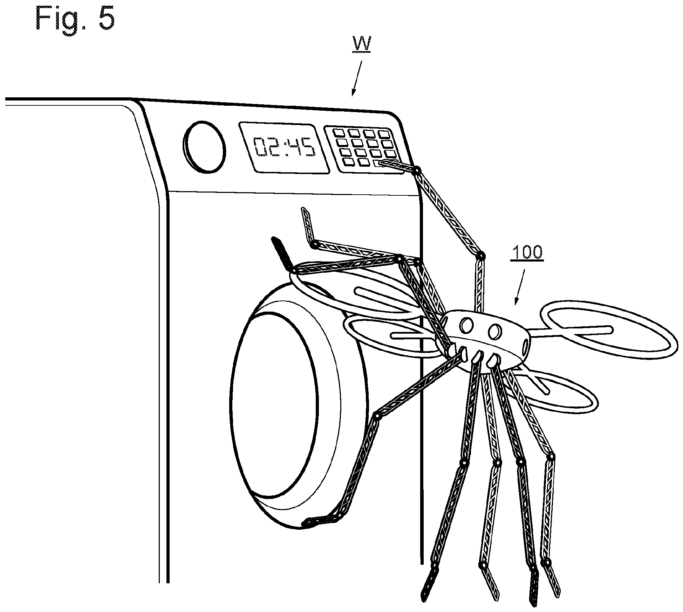

In **Figur 5** ist die Drohne 100 aus den vorstehenden Figuren in einem komplexen Klettereinsatz in einer Haushaltssituation gezeigt. Die hier dargestellte Situation zeigt die Drohne 100 bei der Bewältigung der Aufgabe, ein Waschprogramm einer Waschmaschine W, wie sie haushaltstypisch ist, zu verändern. Mit hier sieben Gliederfüßen 150 bewältigt die Drohne 100 das Klettern an der Waschmaschine W, ein achter Gliederfuß 150 hingegen betätigt einen Schalter der Waschmaschine W. Um die hier skizzierte Aufgabe zu bewältigen, sendet die Drohne 100, die über eine Basisstation 350 mit dem Internet verbunden ist, Daten aus einer Stereokamera 320, die mit Daten einer Lidar-Detektionsvorrichtung 330 angereichert sein können, an einen entfernten Rechner 380. Im vorliegenden Beispiel sendet die Drohne 100 ein Bild der Waschmaschine W und eine angenäherte Kontur der Waschmaschine W an den entfernten Rechner 380 zusammen mit einer formulierten Aufgabe, das Programm der Waschmaschine W zu ändern. Ein KI-Algorithmus im entfernten Rechner 380, der durch eine Vielzahl vergleichbarer Aufgaben anderer Drohnen trainiert worden ist, formuliert eine Steuerungsanweisung an die Drohne 100, einen bestimmten Knopf der Waschmaschine W zu drücken. Der KI-Algorithmus bewältigt dabei die Aufgabe, den Typ der Waschmaschine W zu erkennen und aus der Aufgabenstellung abzuleiten, welcher Knopf der Waschmaschine W betätigt werden muss.

Die im Zusammenspiel der Drohne 100 und des entfernten Rechners 380 beteiligten Elemente sind in **Figur 6** gezeigt. Dort ist eine Zusammenwirkung einer erfindungsgemäßen Drohne 100 mit einem entfernten Rechner 380 als Steuerungsrechner über ein öffentliches Kommunikationsnetzwerk dargestellt. Die Drohne 100 ist über WLAN oder BlueTooth, deren Symbole im Doppelpfeil dargestellt sind, mit einer Basisstation 350 verbunden. WLAN und BlueTooth sind zum Zeitpunkt dieser Anmeldung gängige Funkprotokolle für haushaltstypische oder industrietypische Nahfunknetzwerke. Es können jedoch an die Zeit angepasste andere Protokolle eingesetzt werden. Die Basisstation 350 wirkt als Funk-Relay-Vorrichtung 360. Im Jargon der heutigen Zeit: als WLAN-Router. Die Basisstation 350 kann dazu auch noch als Ladestation 370 dienen. Über die Funk-Relay-Vorrichtung 360 kommuniziert die Drohne über das Internet (eingezeichnet als Wolke) mit einem entfernten Rechner 380. Dieser entfernte Rechner 380 verfügt über eine höhere Rechenkapazität, über eine Datenbank und ist vor allem mit einer Vielzahl vergleichbarer Drohnen verbunden, um über die Rückmeldung der verschiedenen Drohnen 100 zu "lernen", also seinen KI-Algorithmus selbstständig anzupassen.

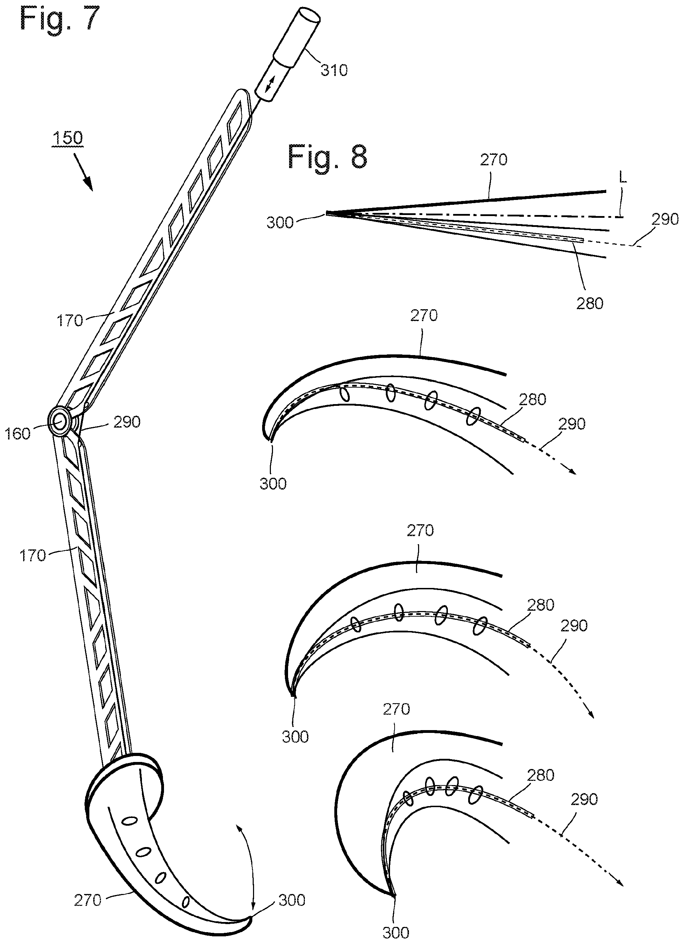

**Figur 7** zeigt einen abgetrennten Gliederfuß 150 der erfindungsgemäßen Drohne 100 mit einem kontinuierlich beweglichen Einzelfinger als Werkzeug 230 oder Greifvorrichtung 220. Die Gliederfüße 150 in Leichtbauweise mit aus Aluminiumblech geformten Lochblechen, die an einen Fachwerkverbund erinnern, lassen sich keine kleineren Gegenstände greifen. Um der Drohne 100 das Greifen beizubringen, kann vorgesehen sein, dass ein Gliederfuß 150 über das Wechselfutter 200 mit dem einer Greifvorrichtung 220 in Form eines Polymerfortsatzes 270 verbunden ist. Der Polymerfortsatz 270 ist ein länglicher Streifen mit silikonartigem oder gummiartigem Gepräge. Innerhalb des Polymerfortsatzes 270 befindet sich ein in Bezug zur Längsachse L exzentrischer Kanal 280. In dem Kanal 280 verläuft eine Stahlseele 290. Dies ist ein feiner, stark belastbarer Draht, der mit dem Apex 300 des Polymerfortsatzes 270 auf der Innenseite fest verbunden ist. Wird an der Stahlseele 290 gezogen, beispielsweise, weil die verlängerte Stahlseele 290 durch das Wechselfutter 200, das seinerseits durch eine Stahlseele durch den Gliederfuß 150 betätigt wird, so krümmt sich der Polymerfortsatz 270. Die Krümmung des Polymerfortsatzes 270 kommt durch den exzentrischen Verlauf des Kanals 280 zustande. Auf der bei der Krümmung nach innen gerichteten Seite des Polymerfortsatzes 270 kann eine Struktur vorhanden sein oder auch Vertiefungen. Diese wirken, wenn sich der Polymerfortsatz 270 zum Greifen um ein Objekt legt, wie ein Saugnapf eines Oktopusses und hilft beim festen Umgreifen eines Objektes.

In den Figuren **Figur 8****.****1****,** **Figur 8****.****2****,** **Figur 8****.****3****,** und **Figur 8****.****4** ist ein kontinuierlich bewegbarer Einzelfinger in verschiedenen Krümmungszuständen wiedergegeben. In Figur 8.1 ist der gerade Polymerfortsatz 270 in teilweise durchbrochener Ansicht dargestellt. In Bezug zur Längsachse L verläuft der Kanal 280 exzentrisch, das heißt neben der Längsachse L. In Figur 8.2 ist eine zunächst nur leichte Krümmung des Polymerfortsatzes 270 gezeigt, die durch ein Ziehen an der Stahlseele 290 erzeugt wird. In Figur 8.3 ist eine schon stärkere Krümmung des Polymerfortsatzes 270 gezeigt, die durch ein weiteres Ziehen an der Stahlseele 290 erzeugt wird. Schließlich ist in Figur 8.4 eine starke Krümmung des Polymerfortsatzes 270 dargestellt, die durch ein fortwährendes Ziehen an der Stahlseele 290 erzeugt wird. Durch die Krümmung des Polymerfortsatzes 270 ist es möglich, kleine Gegenstände sicher zu greifen. Dabei wird der Griff durch eine benetzende, leicht hygroskopische Oberfläche des Silikons oder des Gummis verstärkt. Solche Oberflächen sind als rutschfeste, adhäsiv wirkende Oberflächen aus Alltagsgegenständen bekannt.

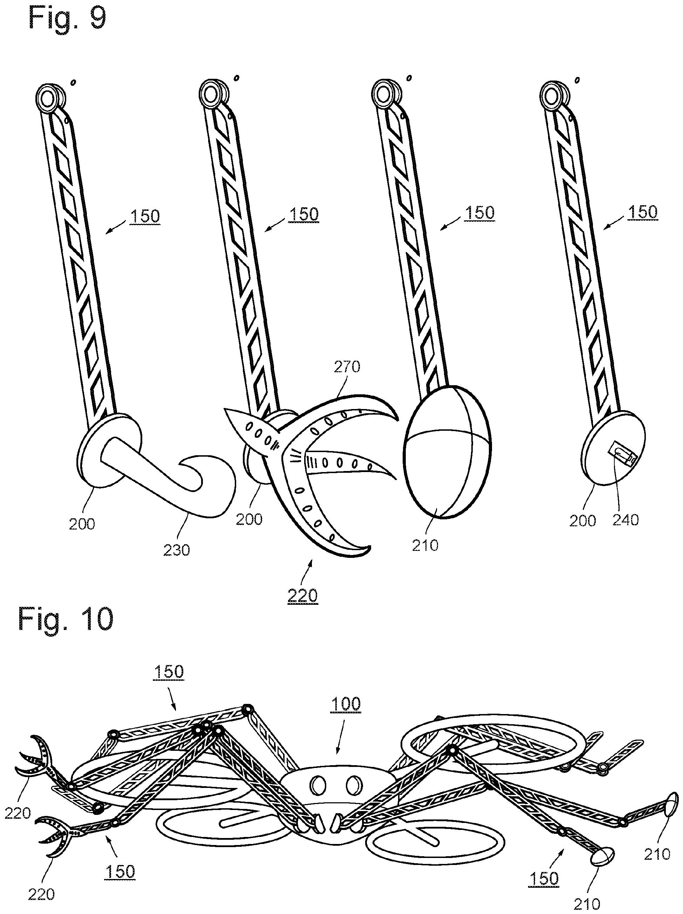

In den Figuren **Figur 9****.****1****,** **Figur 9****.****2****,** und **Figur 9****.****3** ist ein abgetrenntes Glied eines Gliederfußes 150 der erfindungsgemäßen Drohne 100 mit drei verschiedenen Aufsätzen gezeigt. In Figur 9.1 ist ein Haken als beispielhaftes Werkzeug dargestellt, mit dessen Hilfe die Drohne 100 sich an einen entsprechenden Vorsprung anhängen kann. Der beispielhafte Haken ist vielseitig einsetzbar und kann auch zum Heben von Gegenständen verwendet werden, wenn der Gegenstand einen entsprechenden Fortsatz zum Einhaken aufweist. In Figur 9.2 ist eine Greifvorrichtung mit vier Polymerfortsätzen 270 gezeigt, die wie eine Vogelkralle kleine Gegenstände heben kann. In Figur 9.3 ist ein wie ein Polster aussehender Sensor gezeigt. Im Sensor befinden sich ein Temperaturfühler und/oder ein Feuchtigkeitsfühler. Durch diesen Sensor kann eine Drohne 100 feststellen ob eine Oberfläche warm ist, um beispielsweise den Zustand von Gegenständen zu erfassen.

In **Figur 9****.****4** ist ein abgetrenntes Glied 170 eines Gliederfußes 150 der erfindungsgemäßen Drohne 100 mit sichtbarem Wechselfutter 200 gezeigt. Das Wechselfutter 200 weist einen quaderförmigen Riegeldorn auf, in dem ein elektrischer Kontakt 240 angeordnet ist. Dazu verfügt das distale Ende 190 des mindestens einen Gliederfußes 150 über einen elektrischen Kontakt 240 zur Verbindung eines Akkumulators 250 als Teil der Drohne 100 mit einer externen Stromquelle 260, wie zum Beispiel Netzstrom zum Laden des Akkumulators 250. Der elektrische Kontakt 240 ermöglicht eine elektrische Verbindung mit dem Akkumulator 250 der Drohne 100. Es ist möglich, den Akkumulator 250 über diesen elektrischen Kontakt 240 zu laden. Es ist auch möglich, die Drohne 100 dann mit elektrischem Strom zu versorgen, wenn die Drohne 100 bei einem autonomen Akkumulatorwechsel kurzzeitig ohne eigene Stromversorgung den eigenen Ackumulator 250 wechselt.

**Figur 10** zeigt die Drohne 100 aus Figur 2 mit auf einige Gliederfüße 150 aufgesetzten Greifvorrichtungen 220 und sensorischen Vorrichtungen 240 im Krabbelbetrieb. Die Ausstattung der Gliederfüße mit verschiedenen Werkzeugen ist vom Einsatzzweck beliebig variierbar.

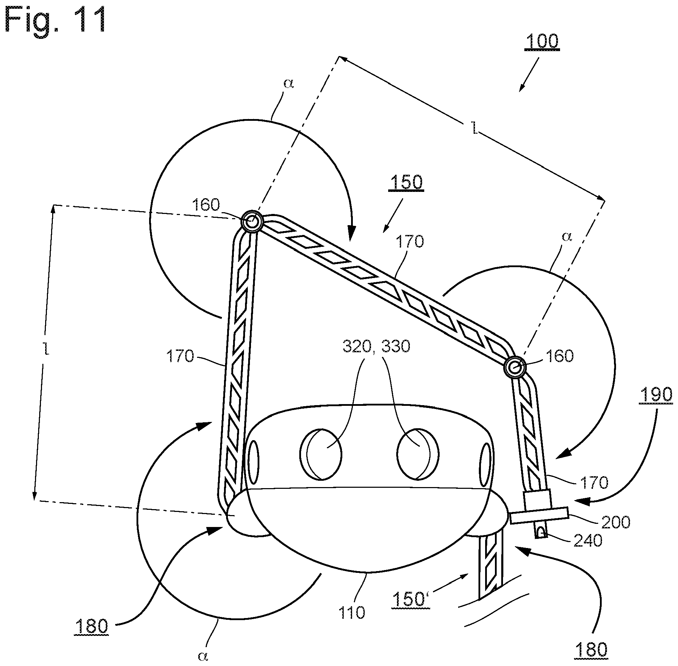

**Figur 11** zeigt eine Skizze zur Darstellung bevorzugter Längen- und Öffnungswinkelverhältnisse für die erfindungsgemäße Drohne 100. In bevorzugter Weise sind die Gliederfüße 150 länglich und schmal. Die Längen l einzelner Glieder 170 und die Öffnungswinkel α der Gelenke 160 der Gliederfüße 150, 150' im Verhältnis zu den Ausmaßen des Zentralkörpers 110 sind bevorzugt so bemessen, dass ein distales Ende 190 eines ersten Gliederfußes 150 bis an ein proximales Ende 180 eines zweiten, dem ersten Gliederfuß 150 gegenüberliegenden Gliederfuß 150' heranführbar ist. Diese Definition erinnert an einen physischen Schulfähigkeitstest für menschliche Kinder. Die Länge und die Anordnung der Gliederfüße, sowie die Öffnungswinkel der Gelenke 160 in den Gliederfüßen 150 verhelfen zu einer hohen Einsatzflexibilität der Drohne 100.

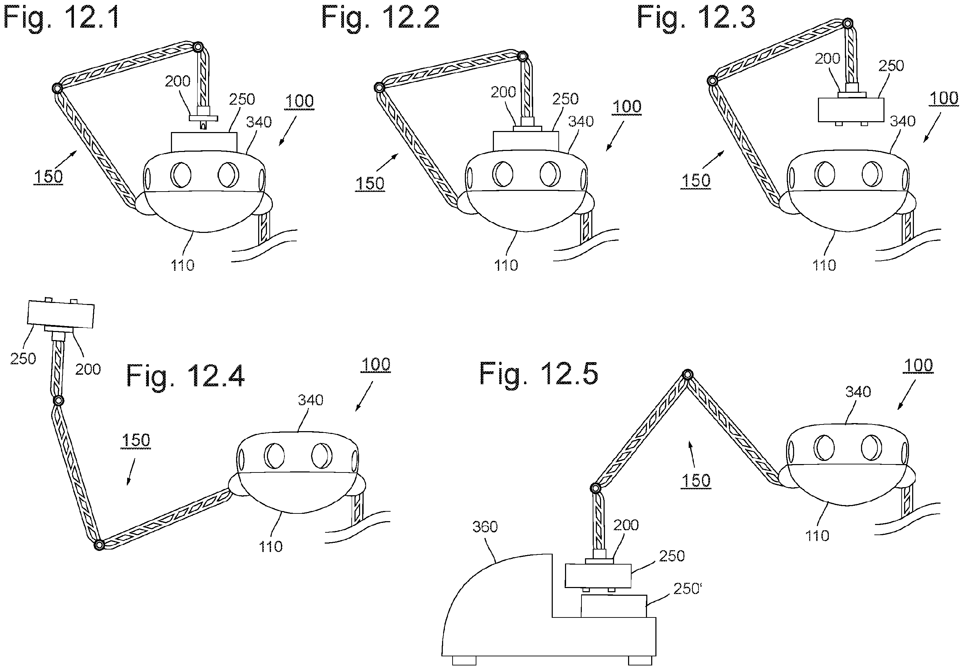

Die Figuren **Figur 12****.****1****,** **Figur 12****.****2****,** **Figur 12****.****3****,** **Figur 12****.****4****,** **Figur 12****.****5** zeigen einen Ausschnitt auf die Ansicht auf eine erfindungsgemäße Drohne 100 in verschiedenen Zuständen bei einem autonomen Wechsel eines Akkumulators 250. Zum Wechsel eines auf oder in der nach oben weisenden Rückenfläche 340 befindlichen Akkumulators 250 greift die Drohne 100 mit einem Gliederfuß 150 auf ihren Rücken und greift mit dem Wechselfutter 200 in eine korrespondierende Aufnahmebuchse in dem Akkumulator 250 ein, wie es in den Figuren 12.1 und 12.2 gezeichnet ist. Damit die Drohne 100 den Akkumulator 250 autonom wechsein kann, kann ein weiterer Kurzzeitakkumulator in dem Zentralkörper 110 vorhanden sein, oder aber, um Eigengewicht zu vermeiden, kann es vorgesehen sein, dass die Drohne 100 mit einem weiteren Gliederfuß 150 elektrischen Strom über den elektrischen Kontakt 240 am Wechselfutter 200 des betreffenden Gliederfußes 150 erhält. Die Drohne 100 hebt sodann den Akkumulator 250 aus seiner Position auf oder in der nach oben weisenden Rückenfläche 340. In diesem Zeitpunkt ist die Drohne 100 abhängig von der äußeren Stromversorgung oder von der Stromversorgung eines Kurzzeitakkumulators. Die Drohne 100 kann sodann durch eine Bewegung des Gliederfußes 150 und auch durch eine Bewegung ihres eigenen Zentralkörpers 110 den Akkumulator 250 über den Gliederfuß 150 schwenken. Dabei kann es möglich sein, den Schwerpunkt des Akkumulators 250 nur wenig zu bewegen und die Gliederfüße 150 durch Umschwenken um den Schwerpunkt des Akkumulators 250 zu bewegen. Diese Technik wird in manchen Industrierobotern angewendet, um Energie zu sparen, aber auch, um die Belastung der Gelenke zu verringern. Ein Steuerungsprogramm kann dazu eine Trajektorie des Akkumulators 250 errechnen, der einfachen und dreidimensionalen Lissajous-Figuren entspricht, um starke Beschleunigungen zu vermeiden. Das hilft, abrupte Lastwechsel zu vermeiden, welche die Standzeit der Mechanik verlängern. In den Figuren 12.4 und 12.5 sind die letzten Phasen des Ausbaus des entleerten Akkumulators 250 dargestellt. In Figur 12.5 setzt die Drohne 100 den Akkumulator 250 in eine Ladestation 360, wo ein weiterer Ackumulator 250' bereits geladen ist und auf seinen Einbau in die Drohne 100 wartet.

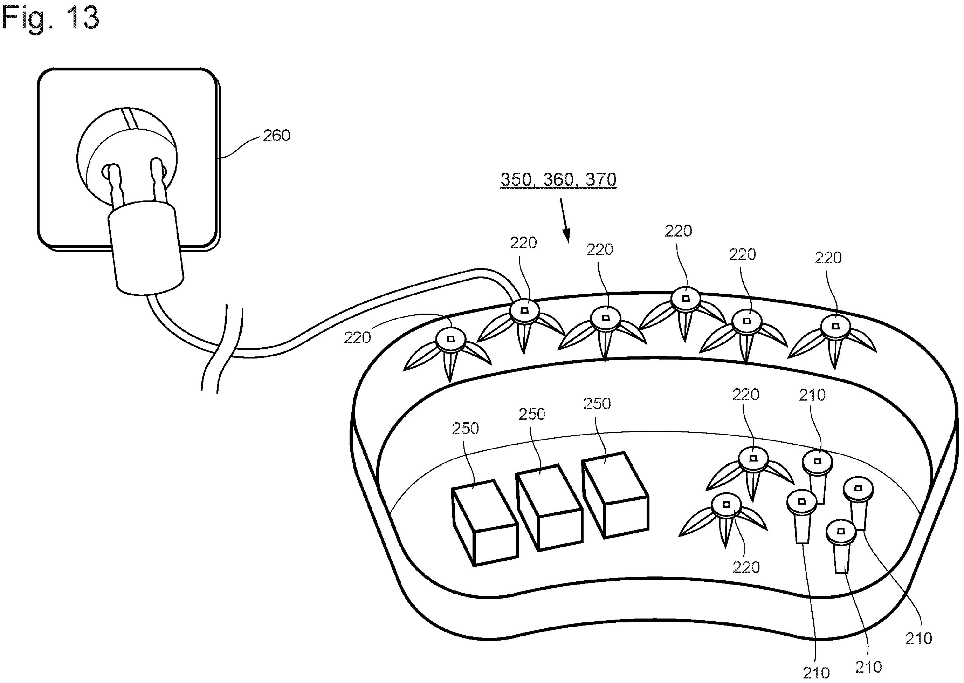

**Figur 13** zeigt eine Darstellung einer Basisstation 350, die als Ladevorrichtung 360 und als Funk-Relays-Station 370 (Router) wirkt. Diese Basisstation 350 kann eine Batterie von Akkumulatoren 250, Greifvorrichtungen 220, sensorische Vorrichtungen 210 und/oder Werkzeuge bereithalten. Durch eine Steuerung eines entfernten Rechners 380 als Steuerungsrechner oder Leitrechner kann die Drohne 100, gesteuert durch den entfernten Computer 380, die Aufsätze auf das Wechselfutter 200 autonom wechseln.

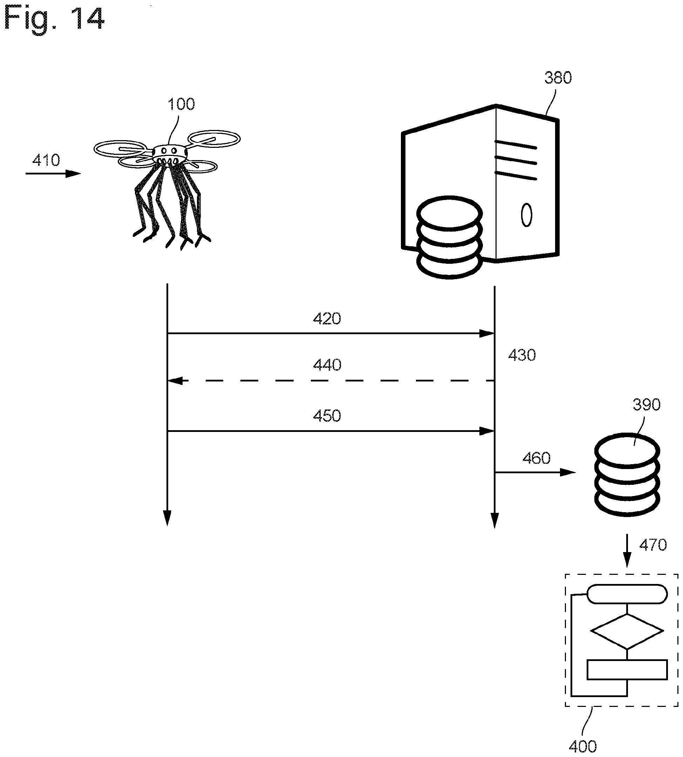

In **Figur 14** ist schließlich eine Skizze zur Verdeutlichung eines Protokolls zur Kommunikation mit einem entfernten Rechner 380 als Steuerungscomputer als Verfahren zum Steuern einer Drohne gezeigt. Es beginnt mit dem Aufnehmen 410 von sensorischen Daten durch die Drohne 100. Sensorische Daten sind Bilder, Stereo-Bilder, Lidar-Daten, Temperatur, Feuchtigkeit, aber gegebenenfalls auch haptische Daten, die über einen Haptik-Sensor erfasst werden. Diese sensorischen Daten werden sodann durch Senden 420 der sensorischen Daten durch die Drohne 100 an einen entfernten Rechner 380 gemeinsam mit einer Aufgabe übermittelt. Das kann zum Beispiel die bereits dargestellte Aufgabe sein, eine Waschmaschine oder ein elektrisches Gerät ein- oder auszuschalten. Daraufhin erfolgt ein Berechnen 430 einer Steuerungsanweisung durch den entfernten Rechner 380. Der entfernte Rechner verfügt über eine künstliche Intelligenz, die durch Feedback dazulernt. Der entfernte Rechner sendet (440) die berechneten Steuerungsinformationen an die Drohne 100. Die Drohne 100 versucht, die Steuerungsbefehle durchzuführen und gibt Feedback. Das geschieht durch Senden (450) von Steuerungserfolgsdaten als Feedback durch die Drohne 100 an den entfernten Rechner 380. Das Feedback kann sein, dass eine vom KI-Algorithmus gemutmaßte Folge eines Wirkens bestätigt oder verneint wird. Der KI-Algorithmus könnte eine Steuerungsinformation geben, wie drücke Knopf in Position (x, y, z in Raumrichtung der drei Raumwinkel r, t, p). Nach dem Drücken sollte die Waschmaschine plötzlich ruhig sein. Ob das der Fall ist, sendet die Drohne 100 als Feedback an den entfernten Rechner 380 zurück, der aus diesen Daten seinen eigenen KI-Algorithmus stets verfeinert. Nach dem Feedback erfolgt also ein Aufnehmen 460 der Steuerungsanweisung und der dazu korrespondierenden Steuerungserfolgsdaten der Drohne 100 in eine Datenbank 390 eines selbstoptimierenden Algorithmus 400 im entfernten Rechner 380, und darauf ein Adaptieren 470 des selbstoptimierenden Algorithmus (KI-Algorithmus) 400 zur Berechnung von Steuerungsanweisungen im entfernten Rechner 380. Bei einer Anfrage durch eine weitere Drohne oder derselben Drohne kann der adaptierte KI-Algorithmus treffsicherer Steuerungsinformationen geben.

Die Erfindung wurde anhand eines Oktapoden demonstriert, nämlich mit 8 Gliederfüßen. Es kommen vom Prinzip her auch Tetrapoden (4 Gliederfüße), Pentapoden (5 Gliederfüße), Hexapoden (6 Gliederfüße), Heptapoden (7 Gliederfüße), Nonapoden (9 Gliederfüße) und Decapoden (10 Gliederfüße) in Betracht. Auch Dodecapoden (12 Gliederfüße) kommen in Betracht. Die Anzahl der Gliederfüße wird durch die zu bewältigenden Aufgaben bestimmt.

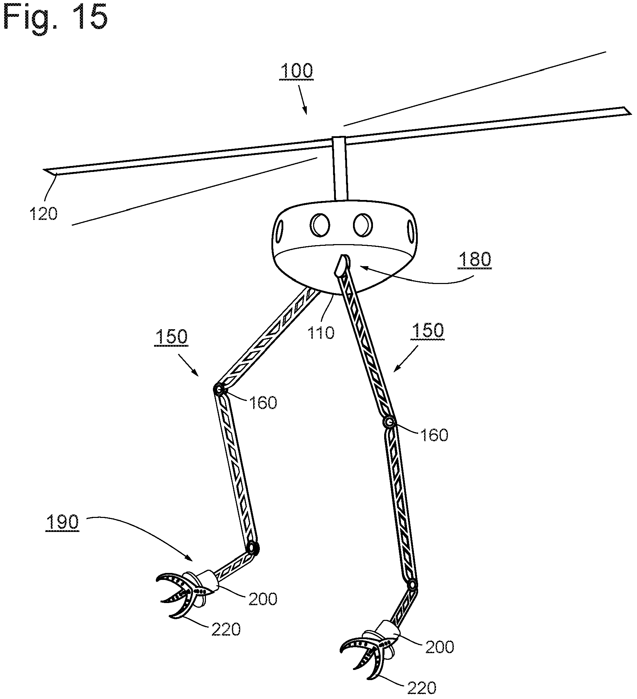

In **Figur 15** ist schließlich eine Einpropeller-Drohne ohne Schutzring dargestellt, die einen im Zentralkörper vorliegenden Drehmomentausgleich aufweist, der durch eine dem Propeller entgegen rotierende Masse dargestellt wird. Diese Drohne hat nur zwei Gliederfüße, gleichwohl kann die Drohne sicher laufen ohne balancieren zu müssen, da sich die Drohne mit der Wirkung des Propellers oder eines Schubelements an Schub abstützen und stabilisieren kann.

In den vorstehenden, beschriebenen Ausführungsformen wurden Drohnen mit Schraubflügeln vorgestellt. Anstelle der Schraubflügel können aber auch ringförmige Düsen eingesetzt werden, die durch ein Gebläse im zentralen Körper angeblasen werden. Drohnen dieser Art werden umgangssprachlich als Dyson-Drohnen oder Jetstream-Drohnen bezeichnet, in Anspielung auf Lüfter des Unternehmens Dyson. Diese Drohnen zeichnen sich nach außen durch eine Aufbauform ohne sich äußerlich erkennbare bewegte Teile aus.

### BEZUGSZEICHENLISTE

| | | | |
|---|---|---|---|
| 100 | Drohne | 320 | Stereokamera |
| 110 | Zentralkörper | 330 | Lidar-Detektionsvorrichtung |
| 120 | Schraubflügel | 340 | Rückenfläche |
| 130 | Aufhängung | 350 | Basisstation |
| 140 | Gegenstand | 360 | Ladevorrichtung |
| 150 | Gliederfuß | 370 | Funk-Relay-Vorrichtung |
| 150' | Gliederfuß | 380 | entfernter Rechner |
| 160 | Gelenk | 390 | Datenbank |
| 170 | Glied | 400 | Algorithmus |
| 180 | proximales Ende | 410 | Aufnehmen |
| 190 | distales Ende | 420 | Senden |
| 200 | Wechselfutter | 430 | Berechnen |
| 210 | sensorische Vorrichtung | 440 | Senden |
| 220 | Greifvorrichtung | 450 | Senden |
| 230 | Werkzeug | 460 | Aufnehmen |
| 240 | elektrischer Kontakt | 470 | Adaptieren |
| 250 | Akkumulator | α | Öffnungswinkel |
| 250' | Akkumulator | A | Achse |
| 260 | externe Stromquelle | L | Längsachse |
| 270 | Polymerfortsatz | I | Länge |
| 280 | Kanal | S | Steuerungsvorrichtung |
| 290 | Stahlseele | W | Waschmaschine |
| 300 | Apex | | |
| 310 | Aktuator | | |

## Patentansprüche

1. Drohne (100), aufweisend
- mindestens einen Zentralkörper (110),
- mindestens ein Schubelement,
- mindestens ein Gliederfuß (150), wobei der mindestens eine Gliederfuß (150) über Gelenke (160) verbundene Glieder (170) aufweist,
wobei der mindestens eine Gliederfuß (150, 150') über ein proximales Ende (180) mit dem Zentralkörper (110) gelenkig verbunden ist,
**dadurch gekennzeichnet, dass**
ein distales Ende (190) des mindestens einen Gliederfußes (150, 150') ein Wechselfutter (200) aufweist, über welches das distale Ende (190) des Gliederfußes (150, 150') mit einer Auswahl an sensorischen Vorrichtungen (210) und/oder Greifvorrichtungen (220) und/oder Werkzeugen (230) verbindbar ist, wobei das distale Ende (190) des mindestens einen Gliederfußes (150, 150') einen elektrischen Kontakt (240) zur Verbindung eines Akkumulators (250) als Teil der Drohne (100) mit einer externen Stromquelle (260) zur Ladung des Akkumulators (250) aufweist.

2. Drohne nach Anspruch 1,
**dadurch gekennzeichnet, dass**
mindestens ein Gelenk (160) des mindestens einen Gliederfußes (150, 150') einen Öffnungswinkel (α) von mehr als 180° aufweist.

3. Drohne nach Anspruch 1 oder 2
**dadurch gekennzeichnet, dass**
das distale Ende (190) des mindestens einen Gliederfußes (150, 150') mit einer Greifvorrichtung (220) verbunden ist, welche aus mindestens einem silikon- oder gummielastischen Polymerfortsatz (270) besteht,
der im Inneren einen zur Längsachse (L) exzentrischen Kanal (280) für eine Stahlseele (290) aufweist,
die mit dem inneren Apex (300) des Polymerfortsatzes (270) verbunden ist und durch den exzentrischen Kanal (280) nach außen geführt ist,
wobei die Stahlseele (290) über einen Aktuator (310) den Polymerfortsatz (270) krümmt.

4. Drohne nach einem der Ansprüche 1 bis 3,
**dadurch gekennzeichnet, dass**
die Längen (l) einzelner Glieder (170) und die Öffnungswinkel (α) der Gelenke des mindestens einen Gliederfußes (150, 150') im Verhältnis zu den Ausmaßen des Zentralkörpers (110) so bemessen sind,
dass ein distales Ende (190) eines ersten Gliederfußes (150) bis an ein proximales Ende (180) eines zweiten, dem ersten Gliederfuß (150) gegenüberliegenden Gliederfuß (150') heranführbar ist.

5. Drohne nach einem der Ansprüche 1 bis 4,
**dadurch gekennzeichnet, dass**
diese eine Steuerungsvorrichtung (310) aufweist, welche über eine Funkverbindung mit einem entfernten Rechner (380) verbindbar und steuerbar ist.

6. Drohne nach einem der Ansprüche 1 bis 5,
**dadurch gekennzeichnet, dass**
der Zentralkörper (110) eine Stereokamera (320) und/oder Lidar-Detektionsvorrichtung (330) aufweist.

7. Drohne nach einem der Ansprüche 1 bis 6,
**dadurch gekennzeichnet, dass**
wobei ein Akkumulator (250) auf einer oder in einer nach oben weisenden Rückenfläche (340) der Drohne (100) angeordnet ist.

8. Drohne nach einem der Ansprüche 1 bis 7,
**dadurch gekennzeichnet, dass**
das mindestens eine Schubelement aus Schraubflügeln (120) besteht,
wobei die Schraubflügel (120) um zueinander im Wesentlichen parallele Achsen (A) rotierend aufgehängt sind, und
wobei die Aufhängungen (130) der Schraubflügel (120) mit dem Zentralkörper (110) starr verbunden sind.

9. Drohne nach einem der Ansprüche 1 bis 7,
**dadurch gekennzeichnet, dass**
das mindestens eine ringförmige Schubdüse ist, die durch ein zentrales Gebläse aus dem Zentralkörper angeblasen werden.

10. Set, bestehend aus
- einer Drohne (100) nach einem der Ansprüche 1 bis 7,
- einer Basisstation (350) , aufweisend
- eine Ladevorrichtung (360) zum elektrischen Laden eines Akkumulators (250),
- eine Funk-Relay-Vorrichtung (Router) (370), und
- eine Mehrzahl and sensorischen Vorrichtungen (210) und/oder Greifvorrichtungen (220) und/oder Werkzeugen (230) zum Einsatz an der Drohne (100).

11. Verfahren zum Steuern einer Verfahren zum Steuern einer Drohne (100), aufweisend
- mindestens einen Zentralkörper (110),
- mindestens ein Schubelement,
- mindestens ein Gliederfuß (150), wobei der mindestens eine Gliederfuß (150) über Gelenke (160) verbundene Glieder (170) aufweist,
wobei der mindestens eine Gliederfuß (150, 150') über ein proximales Ende (180) mit dem Zentralkörper (110) gelenkig verbunden ist, wobei
ein distales Ende (190) des mindestens einen Gliederfußes (150, 150') ein Wechselfutter (200) aufweist, über welches das distale Ende (190) des Gliederfußes (150, 150') mit einer Auswahl an sensorischen Vorrichtungen (210) und/oder Greifvorrichtungen (220) und/oder Werkzeugen (230) verbindbar ist, nach den Ansprüchen 2 bis 10,
**gekennzeichnet durch**
- **Aufnehmen** (410) von sensorischen Daten durch die Drohne (100),
- **Senden** (420) der sensorischen Daten durch die Drohne (100) an einen entfernten Rechner (380),
- **Berechnen** (430) einer Steuerungsanweisung durch den entfernten Rechner (380),
- **Senden** (440) der Steuerungsinformationen durch den entfernten Rechner (380) and die Drohne (100),
- **Senden** (450) von Steuerungserfolgsdaten durch die Drohne (100) an den entfernten Rechner (380),
- **Aufnehmen** (460) der Steuerungsanweisung und der dazu korrespondieren Steuerungserfolgsdaten der Drohne (100) in eine Datenbank (390) eines selbstoptimierenden Algorithmus (400) im entfernten Rechner (380), und
- **Adaptieren** (470) des selbstoptimierenden Algorithmus (400) zur Berechnung von Steuerungsanweisungen im entfernten Rechner (380).

12. Verfahren nach Anspruch 11,
**gekennzeichnet durch**
eine Drohne (100) nach einem der Ansprüche 1 bis 10.

## Claims

1. Drone (100), comprising
- at least one central body (110),
- at least one thrust element,
- at least one link foot (150), the at least one link foot (150) having links (170) connected via joints (160),
wherein the at least one link foot (150, 150') is jointedly connected to the central body (110) via a proximal end (180),
**characterized in that**
a distal end (190) of the at least one link foot (150, 150') has a change chuck (200), via which the distal end (190) of the link foot (150, 150') can be connected to a selection of sensory devices (210) and/or gripping devices (220) and/or tools (230), wherein the distal end (190) of the at least one link foot (150, 150') has an electrical contact (240) for connecting an accumulator (250) as part of the drone (100) to an external power source (260) for charging the accumulator (250).

2. Drone according to claim 1,
**characterized in that**
at least one joint (160) of the at least one link foot (150, 150') has an opening angle (alpha) of more than 180°.

3. Drone according to claim 1 or 2,
**characterized in that**
the distal end (190) of the at least one articulated foot (150, 150') is connected to a gripping device (220) which consists of at least one silicone- or rubber-elastic polymer extension (270)
which in its inside comprises a to the longitudinal axis (L) eccentric channel (280) for a steel core (290),
which is connected to the inner apex (300) of the polymer extension (270) and is guided outwards through the eccentric channel (280),
wherein the steel core (290) curves the polymer extension (270) via an actuator (310).

4. Drone according to one of claims 1 to 3,
**characterized in that**
the lengths (l) of individual links (170) and the opening angles (alpha) of the joints of the at least one link foot (150, 150') are dimensioned in relation to the dimensions of the central body (110),
that a distal end (190) of a first link foot (150) can be moved to a proximal end (180) of a second link foot (150') opposite the first link foot (150).

5. Drone according to any one of claims 1 to 4,
**characterized in that**
it has a control device (310) which can be connected to and controlled by a remote computer (380) via a radio connection.

6. Drone according to any one of claims 1 to 5,
**characterized in that**
the central body (110) comprises a stereo camera (320) and/or lidar detection device (330).

7. Drone according to any one of claims 1 to 6,
**characterized in that**
wherein an accumulator (250) is arranged on or in an upwardly facing rear surface (340) of the drone (100).

8. Drone according to any one of claims 1 to 7,
**characterized in that**
the at least one thrust element consists of rotary wings (120),
wherein the rotary wings (120) are suspended so as to rotate about axes (A) which are substantially parallel to one another, and
wherein the suspensions (130) of the rotary wings (120) are rigidly connected to the central body (110).

9. Drone according to any one of claims 1 to 7,
**characterized in that**
it is at least one annular thrust nozzle which is blown by a central blowing-machine from the central body.

10. Set consisting of
- a drone (100) according to any one of claims 1 to 7,
- a base station (350), comprising
- a charging device (360) for electrically charging an accumulator (250),
- a radio relay device (router) (370), and
- a plurality of sensory devices (210) and/or gripping devices (220) and/or tools (230) for use on the drone (100).

11. Method for controlling a drone (100), comprising
- at least one central body (110),
- at least one thrust element,
- at least one link foot (150), the at least one link foot (150) having links (170) connected via joints (160),
wherein the at least one link foot (150, 150') is jointedly connected to the central body (110) via a proximal end (180), wherein
a distal end (190) of the at least one link foot (150, 150') has a change chuck (200), via which the distal end (190) of the link foot (150, 150') can be connected to a selection of sensory devices (210) and/or gripping devices (220) and/or tools (230), according to claims 2 to 10,
**characterized by**
- **Recording** (410) sensory data by the drone (100),
- **Transmitting** (420) the sensory data by the drone (100) to a remote computer (380),
- **Calculating** (430) a control instruction by the remote computer (380),
- **Transmitting** (440) the control information by the remote computer (380) to the drone (100),
- **Transmitting** (450) control success data by the drone (100) to the remote computer (380),
- **Recording** (460) the control instruction and the corresponding control success data of the drone (100) in a database (390) of a self-optimizing algorithm (400) in the remote computer (380), and
- **Adapting** (470) the self-optimizing algorithm (400) to calculate control instructions in the remote computer (380).

12. Method according to claim 11,
**characterized by**
a drone (100) according to any one of claims 1 to 10.

## Revendications

1. Drone (100), comprenant
- au moins un corps central (110),
- au moins un élément de poussée,
- au moins un pied articulé (150), dans lequel l'au moins un pied articulé (150) présente des segments (170) reliés par des articulations (160),
dans lequel au moins un pied articulé (150, 150') est articulé au corps central (110) par une extrémité proximale (180q),
**caractérisé en ce qu'**
une extrémité distale (190) de l'au moins un pied articulé (150, 150') présente un porte-outils interchangeable (200) par lequel l'extrémité distale (190) du pied articulé (150, 150') peut être reliée à une sélection de dispositifs sensoriels (210) et/ou de dispositifs de préhension (220) et/ou d'outils (230), dans lequel l'extrémité distale (190) de l'au moins un pied articulé (150, 150') comprend un contact électrique (240) pour connecter un accumulateur (250) faisant partie du drone (100) à une source de courant externe (260) pour le chargement de l'accumulateur (250) .

2. Drone selon la revendication 1,
**caractérisé en ce qu'**
au moins une articulation (160) de l'au moins un pied articulé (150, 150') présente un angle d'ouverture (alpha) supérieur à 180°.

3. Drone selon la revendication 1 ou 2,
**caractérisé en ce que**
l'extrémité distale (190) de l'au moins un pied articulé (150, 150') est relié à un dispositif de préhension (220), constitué d'au moins un prolongement polymère (270) en silicone ou en caoutchouc élastique,
présentant à l'intérieur un canal (280) excentré par rapport à l'axe longitudinal (L) pour une âme en acier (290),
qui est reliée à l'apex intérieur (300) du prolongement polymère (270) et qui est dirigée vers l'extérieur à travers le canal excentrique (280),
dans lequel l'âme en acier (290) recourbe le prolongement en polymère (270) par l'intermédiaire d'un actionneur (310).

4. Drone selon l'une quelconque des revendications 1 à 3,
**caractérisé en ce que**
les longueurs (I) des différents segments (170) et les angles d'ouverture (alpha) des articulations d'au moins un membre (150, 150') par rapport aux dimensions du corps central (110) sont tels
qu'une extrémité distale (190) d'un premier pied articulé (150) peut être amenée jusqu'à une extrémité proximale (180) d'un second pied articulé (150') opposé au premier pied articulé (150) .

5. Drone selon l'une quelconque des revendications 1 à 4,
**caractérisé en ce qu'**
il présente un dispositif de commande (310), qui peut être relié à un ordinateur distant (380) par l'intermédiaire d'une liaison radio et qui peut être commandé.

6. Drone selon l'une quelconque des revendications 1 à 5,
**caractérisé en ce que**
le corps central (110) présente une caméra stéréo (320) et/ou un dispositif de détection par Lidar (330).

7. Drone selon l'une quelconque des revendications 1 à 6,
**caractérisé en ce que**
dans lequel un accumulateur (250) est disposé sur ou dans une surface arrière (340) du drone (100) orientée vers le haut.

8. Drone selon l'une quelconque des revendications 1 à 7,
**caractérisé en ce qu'**
au moins un élément de poussée est constitué d'hélices (120), dans lequel les hélices (120) sont suspendues en rotation autour d'axes (A) sensiblement parallèles entre eux, et
dans lequel les suspensions (130) des hélices (120) sont reliées au corps central (110) de manière rigide.

9. Drone selon l'une quelconque des revendications 1 à 7,
**caractérisé en ce que**
l'au moins une tuyère de poussée annulaire est soufflée hors du corps central par un ventilateur central.

10. Ensemble composé
- d'un drone (100) selon l'une quelconque des revendications 1 à 7,
- d'une station de base (350), comprenant
- un dispositif de charge (360) pour charger électriquement un accumulateur (250),
- un dispositif de relais radio (routeur) (370), et
- une pluralité de dispositifs sensoriels (210) et/ou de dispositifs de préhension (220) et/ou d'outils (230) à utiliser sur le drone (100).

11. Procédé de commande d'un procédé de commande d'un drone (100), comprenant
- au moins un corps central (110),
- au moins un élément de poussée,
- au moins un pied articulé (150), dans lequel l'au moins un pied articulé (150) présente des segments (170) reliés par des articulations (160),
dans lequel l'au moins un pied articulé (150, 150') est articulé au corps central (110) par une extrémité proximale (180), dans lequel
une extrémité distale (190) de l'au moins un pied articulé (150, 150') présente un porte-outils interchangeable (200) par l'intermédiaire duquel l'extrémité distale (190) du pied articulé (150, 150') peut être reliée à une sélection de dispositifs sensoriels (210) et/ou de dispositifs de préhension (220) et/ou d'outils (230), selon les revendications 2 à 10,
**caractérisé par**
- **enregistrement** (410) de données sensorielles par le drone (100),
- **transmission** (420) des données sensorielles par le drone (100) à un ordinateur distant (380),
- **calcul** (430) d'une instruction de commande par l'ordinateur distant (380),
- **transmission** (440) des informations de commande par l'ordinateur distant (380) au drone (100),
- **transmission** (450) par le drone (100) de données de succès de commande à l'ordinateur distant (380),
- **enregistrement** (460) de l'instruction de commande et des données correspondantes de succès de commande du drone (100) dans une base de données (390) d'un algorithme auto-optimisant (400) dans l'ordinateur distant (380), et
- **adaptation** (470) de l'algorithme auto-optimisant (400) pour calculer des instructions de commande dans l'ordinateur distant (380) .

12. Procédé selon la revendication 11,
**caractérisé par**
un drone (100) selon l'une quelconque des revendications 1 à 10.
